# DEMANDE DE BREVET EUROPEEN

(11) **EP 4 796 438 A1**
(43) Date de publication de la demande: **26.08.2026**
(21) Numéro de dépôt: 26152629.7
(22) Date de dépôt: 19.01.2026
(51) Int. Cl.: B64C 13/00, G05D 1/49

(54) **PROCÉDÉ ET SYSTÈME DE DÉSATURATION DE SURFACES DE CONTRÔLE D'UN AÉRONEF INTÉGRÉ DANS UNE CINÉMATIQUE DE ROULIS D'UN AÉRONEF**

(30) Priorité: 19.02.2025 FR 2501714
(71) Demandeur: AIRBUS OPERATIONS (S.A.S.), 31060 Toulouse (FR)
(72) Inventeur: BOSCHIAN, Julien, 31060 TOULOUSE Cedex 9 (FR)
(74) Mandataire: Airbus-OPS SAS

(57) **Abrégé**

La présente divulgation concerne un procédé et un système de désaturation de premières surfaces de contrôle vers des deuxièmes surfaces de contrôle intégré dans une cinématique de roulis d'un aéronef. Le procédé comprend : déterminer (302) un premier et un deuxième moments de roulis commandés à appliquer à des premières, respectivement des deuxièmes, surfaces de contrôle, à partir d'un premier, respectivement d'un deuxième, ordre de loi de pilotage à réaliser par lesdites premières, respectivement deuxièmes, surfaces de contrôle ; déterminer (303) un premier, respectivement un deuxième, angle de déflexion desdites premières, respectivement deuxièmes, surfaces de contrôle, à partir desdits premier et deuxième moments de roulis commandés, et d'une fonction de conversion non-linéaire ; braquer lesdites premières, respectivement deuxièmes, surfaces de contrôle, selon ledit premier, respectivement deuxième, angle de déflexion. Il est ainsi possible d'améliorer le contrôle de l'aéronef autour de son axe de roulis en prenant en compte la non-linéarité entre l'angle de braquage des ailerons et le moment de roulis correspondant.

## Description

### DOMAINE TECHNIQUE

Le domaine de la présente divulgation concerne une fonction de répartition d'un ordre de loi de pilotage, sur les différentes gouvernes disponibles pour réaliser ce pilotage. Cette fonction est appelée « cinématique de roulis », et permet la réalisation du contrôle de l'aéronef autour de son axe de roulis.

### ETAT DE LA TECHNIQUE ANTERIEURE

En général, le contrôle du mouvement de roulis d'un aéronef met en œuvre les trois éléments suivants :
1) une loi de pilotage, ou loi de commande de vol, correspondant à un algorithme informatique configuré pour déterminer, à partir d'une commande de vol émise par un pilote, ou un pilote automatique, les ordres de loi de pilotage (e.g., sous la forme d'un angle de braquage, ou de déflexion, des surfaces de contrôle) à envoyer à un groupe de gouvernes, ou surfaces de contrôle, de l'aéronef pour le contrôle de son attitude et de sa trajectoire ;
2) une cinématique de roulis de l'aéronef correspondant à la traduction ou conversion de l'ordre de la loi de pilotage en ordres de braquages des gouvernes. Cette cinématique de roulis a pour objectif de permettre de calculer les ordres de loi de pilotage à fournir aux ailerons et aux aérofreins (ou « *spoilers* » en anglais) afin que le moment de roulis appliqué sur l'aéronef corresponde au moment de roulis commandé. Cette cinématique de roulis remplit ainsi deux fonctions : (i) répartir les ordres de loi de pilotage, d'une part en ordre de loi de pilotage à fournir aux ailerons, et d'autre part en ordre de loi de pilotage à fournir aux spoilers, pour le braquage de ces surfaces de contrôle et la réalisation de l'ordre de roulis de l'aéronef, (ii) déterminer l'angle de déflexion à appliquer sur les ailerons, respectivement sur les spoilers, en fonction de ces ordres de loi de pilotage fournis aux ailerons et aux spoilers afin de rendre linéaire le moment généré par les surfaces de contrôle par rapport à l'ordre de loi de pilotage.
3) des actionneurs qui mettent en mouvement les ailerons et les spoilers pour réaliser les ordres de loi de pilotage et donc l'ordre de roulis de l'aéronef.

Lors de variations rapides des commandes de vol émises par un pilote, ou le pilote automatique, si les ordres de loi de pilotage à réaliser par les ailerons correspondent à une vitesse de déflection des ailerons supérieure ou égale à leur vitesse maximale de déflection (e.g., de l'ordre de 40°/s), le braquage des ailerons réalisé ne correspond pas exactement à celui commandé par la cinématique de roulis. En conséquent, le moment de roulis à appliquer sur l'aéronef n'est plus égal à celui ordonné par la loi de pilotage. Il en résulte une saturation des ailerons, ce qui peut se traduire par un déphasage entre le moment de roulis réel et le moment de roulis commandé et donc une réduction de performance de pilotage.

Pour contrer ce phénomène de saturation des ailerons, il existe une fonction dite « de désaturation » des ailerons vers les spoilers. Cette fonction estime le braquage non réalisé par les ailerons à cause de leur saturation, approxime le moment de roulis à appliquer sur les ailerons, et retraduit celui-ci en un ajout d'ordre de loi de pilotage à réaliser par les spoilers. Cependant, cette approximation du moment de roulis à appliquer sur les ailerons est inexacte, puisque l'évolution du moment de roulis en fonction des braquages des ailerons est non-linéaire.

La situation peut être améliorée. Il est notamment souhaitable de fournir une solution permettant d'améliorer la réalisation de la cinématique de roulis d'un aéronef en cas de variation rapide des commandes de vol provoquant une saturation des ailerons.

Le document US 2019/202544 A1 divulgue un procédé selon l'art antérieur de désaturation de premières surfaces de contrôle vers des deuxièmes surfaces de contrôle, intégré dans une cinématique de roulis d'un aéronef.

### EXPOSE DE L'INVENTION

Il est proposé ici un nouveau procédé de désaturation de premières surfaces de contrôle vers des deuxièmes surfaces de contrôle intégré dans une cinématique de roulis d'un aéronef, ledit aéronef étant équipé desdites premières surfaces de contrôle et desdites deuxièmes surfaces de contrôle. Le procédé est conforme à la revendication 1.

Avantageusement, il est possible d'améliorer la réalisation de la cinématique de roulis de l'aéronef en prenant en compte la non-linéarité entre l'angle de braquage des ailerons et le moment de roulis correspondant.

Avantageusement, cette fonction de conversion non-linéaire, ou fonction de désaturation ne travaille plus à partir des braquages commandés par la cinématique de roulis, mais à partir des moments de roulis qui vont être demandés aux ailerons et aux spoilers. Ainsi, peu importe la position courante des ailerons et des spoilers, cette fonction va quantifier le moment de roulis qui n'est pas réalisé par les ailerons à cause de leur saturation, et demander d'ajouter ce même moment de roulis à celui ordonné aux spoilers. Le braquage à ajouter aux spoilers peut alors être déterminé pour réaliser ce moment de roulis.

Selon un mode de réalisation, ladite fonction de conversion non-linéaire est basée sur une table mettant en correspondance une pluralité de paramètres aérodynamiques dudit aéronef à un moment de roulis pour lesdites premières surfaces de contrôle, respectivement pour lesdites deuxièmes surfaces de contrôle.

Selon un mode de réalisation, au moins un autre ordre de loi de pilotage est combiné audit premier ordre de loi de pilotage et/ou audit deuxième ordre de loi de pilotage.

Il est aussi proposé ici un système de désaturation de premières surfaces de contrôle vers des deuxièmes surfaces de contrôle intégré dans une cinématique de roulis d'un aéronef, selon la revendication 4.

Il est aussi proposé ici un aéronef comprenant un système tel que décrit précédemment.

Il est aussi proposé un produit programme d'ordinateur, comportant des instructions entraînant l'exécution, par un processeur, du procédé évoqué ci-dessus selon l'un quelconque de ses modes de réalisation, lorsque lesdites instructions sont lues et exécutées par le processeur.

Il est aussi proposé un support de stockage, stockant de telles instructions entraînant l'exécution, par le processeur, du procédé évoqué ci-dessus selon l'un quelconque de ses modes de réalisation, lorsque lesdites instructions sont lues depuis le support de stockage et exécutées par le processeur.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
La **figure 1** illustre schématiquement, en vue de côté, un aéronef équipé d'un système de contrôle de l'aéronef autour de son axe de roulis, selon un mode de réalisation ;
La **figure 2** illustre schématiquement un exemple d'architecture matérielle d'un système de contrôle de l'aéronef autour de son axe de roulis incluant la cinématique de roulis d'un aéronef, selon un mode de réalisation ;
La **figure 3** illustre sous forme de diagramme les étapes d'un procédé de désaturation de premières surfaces de contrôle vers des deuxièmes surfaces de contrôle intégré dans une cinématique de roulis d'un aéronef, selon un mode de réalisation ;
La **figure 4** illustre sous forme de graphique un exemple de répartition d'un ordre de loi de pilotage entre les ailerons et les spoilers tel que connu de l'état de l'art.

### EXPOSE DETAILLE DE MODES DE REALISATION

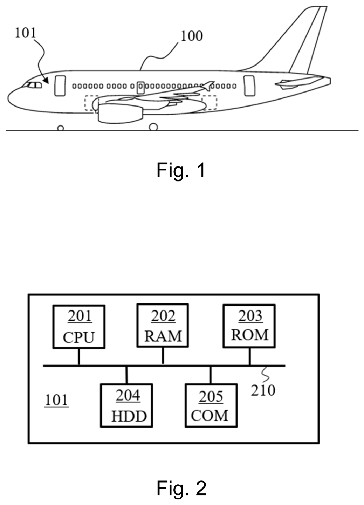

La **figure 1** illustre ainsi schématiquement, en vue de côté, un aéronef 100 équipé d'un système 101 de désaturation de premières surfaces de contrôle vers des deuxièmes surfaces de contrôle intégré dans une cinématique de roulis d'un aéronef (aussi appelé par la suite système de contrôle de l'aéronef autour de son axe de roulis 101 ou système 101), selon un mode de réalisation de la cinématique de roulis.

Le système 101 est un équipement électronique embarqué dans l'aéronef 100. Par exemple, le système 101 fait partie de la circuiterie électronique de l'avionique de l'aéronef 100. Par exemple, le système 101 est intégré aux calculateurs de commande de vol de l'aéronef 100. Les calculateurs de commande de vol sont configurés pour transmettre un ordre de loi de pilotage (e.g., sous la forme d'un angle de braquage ou de déflexion des surfaces de contrôle) aux actionneurs qui braquent alors des surfaces de contrôle de l'aéronef 100. En particulier, les calculateurs de commande de vol sont configurés pour recevoir les positions des commandes de vol du pilote (e.g., mini-manche), ainsi que des données provenant des capteurs de l'aéronef (e.g., centrales à inertie, sondes Pitot, etc.). Les ordres du pilote automatique sont également collectés. L'ensemble de ces paramètres sont traités par les lois de commandes de vol, pour élaborer des ordres envoyés aux actionneurs de chaque gouverne ou surface de contrôle.

La **figure 2** illustre schématiquement un exemple de plateforme matérielle permettant d'implémenter, sous forme de circuiterie électronique, le système 101, selon un mode de réalisation.

La plateforme matérielle comporte, reliés par un bus de communication 210, un processeur ou CPU (« *Central Processing Unit »* en anglais) 201 ; une mémoire vive RAM (« *Random-Access Memory »* en anglais) 202 ; une mémoire morte 203, par exemple de type ROM (« *Read Only Memory* » en anglais) ou EEPROM (« *Electrically-Erasable Programmable ROM* » en anglais), telle qu'une mémoire Flash ; une unité de stockage, telle qu'un disque dur HDD (« *Hard Disk Drive* » en anglais) 204, ou un lecteur de support de stockage, tel qu'un lecteur de cartes SD (« *Secure Digital* » en anglais) ; et un gestionnaire d'interfaces COM 205.

Le gestionnaire d'interfaces COM 205 permet au système 101 d'interagir avec les systèmes avioniques de l'aéronef 100 tels que : les calculateurs de commandes de vol, les capteurs, etc.

Le processeur 201 est capable d'exécuter des instructions qui forment un programme d'ordinateur et qui sont chargées dans la mémoire vive 202 à partir de la mémoire morte 203, d'une mémoire externe, d'un support de stockage (tel qu'une carte SD), ou d'un réseau de communication. Lorsque la plateforme matérielle est mise sous tension, le processeur 201 est capable de lire de la mémoire vive 202 les instructions précitées et de les exécuter. Quand elles sont lues depuis la mémoire vive 202 ou un support de stockage et exécutées par le processeur 201, ces instructions (qui forment un programme d'ordinateur) entraînent l'exécution, par le processeur 201, de tout ou partie des étapes ou procédés ou plus largement des séquences de fonctionnement de l'aéronef décrites dans la présente description.

Tout ou partie des étapes, procédés et fonctionnements décrits ici peut ainsi être implémenté sous forme logicielle par exécution d'un ensemble d'instructions par une machine programmable, par exemple un processeur de type DSP (« *Digital Signal Processor* » en anglais) ou un microcontrôleur, ou être implémenté sous forme matérielle par une machine ou un composant électronique (« *chip* » en anglais) dédié ou un ensemble de composants électroniques (« *chipset* » en anglais) dédié, par exemple un composant FPGA (« *Field Programmable Gate Array* » en anglais) ou ASIC (« *Application Specific Integrated Circuit* » en anglais). D'une manière générale, le système 101 comporte de la circuiterie électronique adaptée et configurée pour implémenter tout ou partie des fonctionnements, procédés et étapes décrits ici.

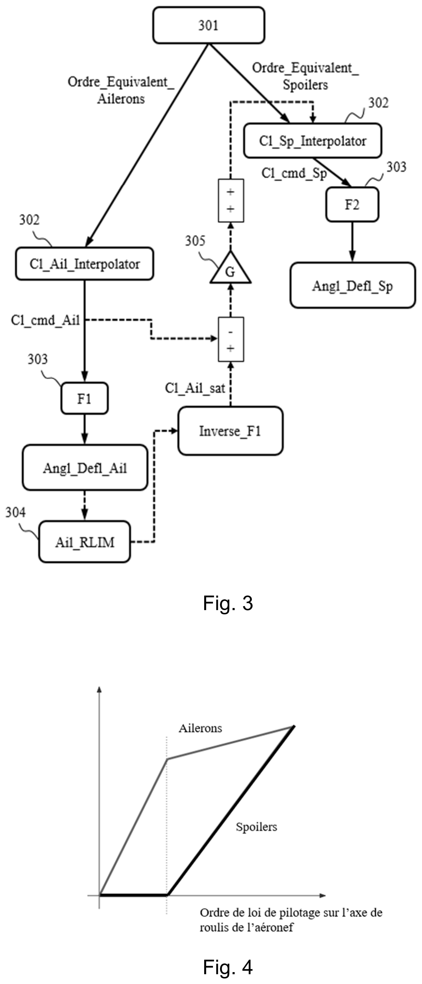

La **figure 3** illustre sous forme d'un diagramme des étapes d'un procédé de réalisation d'une cinématique de roulis d'un aéronef 100 montrant un procédé de désaturation de premières surfaces de contrôle (e.g., ailerons) vers des deuxièmes surfaces de contrôle (e.g., spoilers) intégré dans une cinématique de roulis d'un aéronef 100, selon un mode de réalisation. Tout ou partie de ce procédé est implémenté par le système 101 décrit ci-dessus. Il est à noter qu'il est entendu par le terme « intégré » le fait que le procédé de désaturation selon l'invention est ajouté ou incorporé de manière coordonnée dans le mécanisme de contrôle de roulis de l'aéronef, c'est-à-dire dans la cinématique de roulis pour une gestion optimale des manœuvres de l'aéronef 100.

Au cours d'une étape 301, le système 101 reçoit une commande de vol émise par un pilote ou un pilote automatique. Cette commande de vol est, par exemple, une commande destinée à mettre l'aéronef 100 en mouvement de rotation autour de son axe de roulis. Une loi de pilotage est alors exécutée afin de déterminer un ordre de loi de pilotage commandé (e.g., sous la forme d'un angle de braquage ou de déflexion des surfaces de contrôle) pour la mise en mouvement des surfaces de contrôle telles que les ailerons et les spoilers de l'aéronef 100.

A l'issue de cette étape 301, l'ordre de loi de pilotage commandé est réparti entre un premier ordre de loi de pilotage (Ordre_Equivalent_Ailerons) à réaliser par des premières surfaces de contrôle, telles que les ailerons, et un deuxième ordre de loi de pilotage (Ordre_Equivalent_Spoilers) à réaliser par les deuxièmes surfaces de contrôle telles que les spoilers. Ces premier et deuxième ordres de loi de pilotage sont exprimés en ordre dit « de gauchissement ». Cet ordre de gauchissement est donné en termes de moment de roulis. Autrement dit, un ordre de gauchissement représente la quantité de moment de roulis (valeur adimensionnée) pour la capacité aérodynamique de l'aéronef 100.

Cette répartition de l'ordre de loi de pilotage commandé entre le premier et le deuxième ordres de loi de pilotage est réalisée de façon connue et arbitraire, par exemple, pour tenir compte de la qualité de vol de l'aéronef 100, du ressenti pilote, etc. Par exemple, de façon classique, les petits ordres de loi de pilotage commandés sont généralement convertis exclusivement ou presque exclusivement en ordres de loi de pilotage pour le braquage des ailerons et des ordres de loi de pilotage pour le braquage des spoilers sont progressivement ajoutés lorsque les ordres de loi de pilotage commandés deviennent plus élevés. La **figure 4** illustre sous forme de graphique un exemple de répartition d'un ordre de loi de pilotage, correspondant à un ordre de roulis de l'aéronef 100, entre les ailerons et les spoilers. Selon cet exemple, les ailerons sont déployés avant les spoilers en fonction de l'ordre de roulis venant de la loi de pilotage.

Au cours d'une étape 302, le système 101 convertit les premier et deuxième ordres de loi de pilotage en moments de roulis commandé pour les premières et deuxièmes surfaces de contrôle (i.e., ailerons et spoilers). Pour cela, le système 101 exécute une fonction dite « de conversion linéaire » qui est une fonction linéaire permettant de convertir un ordre de loi de pilotage appliqué sur les ailerons, respectivement les spoilers, en moment de roulis à appliquer sur les ailerons, respectivement les spoilers. Cette fonction de conversion linéaire à appliquer pour les ailerons (Cl_Ail_Interpolator), respectivement les spoilers (Cl_Sp_Interpolator) prend en entrée le premier ordre de loi de pilotage pour les premières surfaces de contrôle (Ordre_Equivalent_Ailerons), respectivement le deuxième ordre de loi de pilotage pour les deuxièmes surfaces de contrôle (Ordre_Equivalent_Spoilers). Dans un exemple, le premier ordre de loi de pilotage pour les premières surfaces de contrôle (Ordre_Equivalent_Ailerons) est une valeur adimensionnée comprise dans un intervalle de valeurs délimité par une valeur minimale, notée Min et une valeur maximale, notée Max, par exemple [-20, +20]. Cette valeur adimensionnée est, par exemple, similaire à un angle de braquage d'une commande de vol du pilote dans la cabine de pilotage de l'aéronef 100. Par convention de signe, -20 (ordre_equivalent_min) correspond à un sens de virage vers la droite de l'aéronef 100, et inversement +20 correspond à un sens de virage vers la gauche de l'aéronef 100. Les ailerons peuvent se déplacer en rotation (angle de déflexion) entre une valeur angulaire minimale, notée angle_min, et une valeur angulaire maximale, notée angle_max, généralement situées de part et d'autre de la valeur angulaire 0 degrés.

La valeur de moment de roulis résultant des ailerons est notée Cl_max pour l'aileron droit allant à sa valeur angulaire minimale angle_min (i.e., déflexion de l'aileron droit vers le haut) et l'aileron gauche allant à sa valeur angulaire maximale angle_max (i.e., déflexion de l'aileron gauche vers le bas). Cl_min est la valeur opposée à Cl_max, obtenue lorsque l'aileron gauche est à sa valeur angulaire minimale angle_min et l'aileron droit est à sa valeur angulaire maximale angle_max.

La valeur de moment de roulis résultant des ailerons, pour une déflexion correspondant à un angle de 0 degrés, est nulle. Par convention de signe, Cl_max correspond à un sens de virage vers la droite.

Ainsi, cette fonction de conversion linéaire exécutée par le système 101 permet d'obtenir la relation suivante entre l'entrée correspondant à un ordre de loi de pilotage à réaliser par les ailerons (Ordre_Equivalent_Ailerons) et la sortie correspondant à un moment de roulis commandé à appliquer sur les ailerons (cl_cmd_ail), telle que :
- lorsque l'aileron gauche est à sa valeur angulaire minimale angle_min et l'aileron droit est à sa valeur angulaire maximale angle_max, alors cl_cmd_ail = cl_min ;
- lorsque les ailerons gauche et droit sont à une valeur angulaire nulle, alors cl_cmd_ail = 0 ;
- lorsque l'aileron droit est à sa valeur angulaire minimale angle_min et l'aileron gauche est à sa valeur angulaire maximale angle_max, alors cl_cmd_ail = cl_max.

Par exemple, pour un virage de l'aéronef 100 vers la droite, la relation étant linéaire, on a :$cl_cmd_ail \left(0,5 x ordre_Equivalent_Ailerons_Min\right) = 0,5 x cl_max$

Optionnellement, d'autres ordres de loi de pilotage à réaliser avec les ailerons peuvent être ajoutés à l'ordre de loi de pilotage issu de la loi de pilotage exécutée, en entrée de l'étape 302, pour réaliser le mixage de différentes fonctions (LAF ou *« Load Alleviation Function»* en anglais ou « Fonction d'allègement des charges», fonction dite « Droop » ou « Fonction d'augmentation de la portance par les ailerons », ...). Ces différentes fonctions impactant la position neutre des ailerons sont considérées afin de garder une répartition ailerons et spoilers cohérente et une bonne linéarisation des moments de surfaces de contrôle par rapport à l'ordre de loi.

Le fait d'ajouter ces ordres de loi de pilotage à ce niveau permet d'assurer la linéarité de la cinématique pour l'ordre de loi de pilotage global ainsi déterminé.

Le système 101 exécute une fonction de conversion linéaire (Cl_Spoilers_Interpolator) similaire pour les deuxièmes surfaces de contrôle (i.e., spoilers).

Cela permet d'avoir une relation linéaire entre l'ordre de loi de pilotage à réaliser par les ailerons et l'efficacité en roulis des ailerons, exprimée en termes de moment de roulis. Il convient de noter que la relation entre l'angle de braquage des ailerons et le moment de roulis correspondant n'est pas linéaire.

Ainsi, au cours d'une étape 303, le système 101 convertit le moment de roulis commandé à appliquer aux ailerons (Cl_cmd_Ail), respectivement aux spoilers (Cl_cmd_Sp), en déflexion angulaire commandée des premières surfaces de contrôle (i.e., ailerons), respectivement des deuxièmes surfaces de contrôles (i.e., spoilers) selon une fonction dite « de conversion non-linéaire » à appliquer aux ailerons, notée F1, respectivement à appliquer aux spoilers, notée F2.

En particulier, le moment de roulis commandé à appliquer aux ailerons (Cl_cmd_Ail), respectivement à appliquer aux spoilers (Cl_cmd_Sp) est converti en une déflexion angulaire commandée des ailerons (Angl_Defl_Ail), respectivement des spoilers (Angl_Defl_Sp). Autrement dit, la fonction de conversion non-linéaire F1, à appliquer au moment de roulis commandé des ailerons, est une fonction non linéaire qui permet de convertir le moment de roulis commandé des ailerons (cl_cmd_ail) en une déflexion angulaire commandée (Angl_Defl_Ail).

Cette fonction de conversion non-linéaire F1 est mise en œuvre de façon dite « tabulée », c'est-à-dire en utilisant une table ayant comme paramètres d'entrée un ensemble de paramètres aérodynamiques de l'aéronef 100 (e.g., nombre de Mach, altitude, angle d'incidence, configuration des becs et volets...) pour un ensemble de valeurs de moment de roulis commandé des ailerons comprises entre Cl_min et Cl_max. Une interpolation linéaire peut être réalisée pour des valeurs de moment de roulis commandé comprises entre deux valeurs de moment de roulis commandé appartenant à cet ensemble de valeurs. De façon particulière, cette table est déterminée sur la base de mesures réalisées lors d'essais en vol sur l'aéronef 100 considéré ou sur un aéronef du même type.

De la même façon, la fonction de conversion non-linéaire à appliquer aux spoilers F2 permettant de convertir le moment de roulis commandé des spoilers (Cl_cmd_Sp) en une déflexion angulaire commandée (Angl_Defl_Sp) est une fonction non linéaire, mise en œuvre de façon tabulée. La table correspondante est également déterminée sur la base de mesures réalisées lors d'essais en vol sur l'aéronef 100 considéré ou sur un aéronef du même type.

Comme décrit précédemment, les ailerons ne peuvent pas dépasser une vitesse maximale de rotation lors de leurs manœuvres, par exemple 40 °/seconde. Ainsi, lors de variations rapides d'ordre de loi de pilotage, la déflection commandée des ailerons peut venir en saturation (Ail_RLIM) et par conséquent ne pas générer le moment de roulis attendu par la loi de pilotage. Ainsi, au cours d'une étape 304, lorsque les ailerons sont saturés en raison d'une variation rapide d'ordre de loi de pilotage, la position angulaire réelle des ailerons est mesurée.

En inversant la table correspondant à la fonction de conversion non-linéaire à appliquer aux ailerons F1 (Inverse_F1), il est possible de déterminer le moment de roulis réel (Cl_ail_sat) résultant de ladite position angulaire réelle des ailerons. Par différence avec le moment de roulis commandé (cl_cmd_ail) déterminé à l'issue de l'étape 302, il est possible de déterminer le moment de roulis dit « non réalisé », ou delta de moment de roulis, du fait de la saturation des ailerons.

L'utilisation des tables de conversion entre le moment de roulis commandé et la déflexion angulaire des ailerons, et réciproquement, permet une conversion précise entre les valeurs desdits paramètres. Il en résulte que le delta de moment de roulis est déterminé de façon précise.

Au cours d'une étape 305, le delta de moment de roulis, ou moment de roulis non réalisé par les ailerons, est converti en ordre de loi de pilotage à réaliser par les spoilers pour compenser cette limitation des ailerons. Cela est réalisé en appliquant à ce delta de moment de roulis, un gain G correspondant à la pente d'évolution du moment de roulis à appliquer aux spoilers en fonction de l'ordre de loi de pilotage à réaliser par les spoilers (Ordre_Equivalent_Spoilers). Il permet de convertir ou traduire le moment de roulis non réalisé en un ordre de loi de pilotage à réaliser par les spoilers.

L'ordre de loi de pilotage ainsi déterminé est ajouté à l'ordre de loi de pilotage à réaliser par les spoilers (Ordre_Equivalent_Spoilers) issu de la loi de pilotage, tel que déterminé à l'étape 301. De la même façon que pour les ailerons, d'autres ordres de loi de pilotage optionnels à réaliser par spoilers peuvent être ajoutés à ce niveau de façon à garantir la linéarité de la relation entre le moment de roulis commandé par les spoilers et l'ordre de loi de pilotage global ainsi déterminé.

## Revendications

1. Procédé de désaturation de premières surfaces de contrôle vers des deuxièmes surfaces de contrôle intégré dans une cinématique de roulis d'un aéronef (100), ledit aéronef étant équipé desdites premières surfaces de contrôle et desdites deuxièmes surfaces de contrôle, ledit procédé étant implémenté dans un système (101) implémenté sous forme de circuiterie électronique, et ledit procédé comprenant :
- déterminer (302) un premier moment de roulis commandé à appliquer auxdites premières surfaces de contrôle, respectivement un deuxième moment de roulis commandé à appliquer auxdites deuxièmes surfaces de contrôle, à partir d'un premier ordre de loi de pilotage à réaliser par lesdites premières surfaces de contrôle, respectivement à partir d'un deuxième ordre de loi de pilotage à réaliser par lesdites deuxièmes surfaces de contrôle,
- déterminer (303) un premier angle de déflexion desdites premières surfaces de contrôle, respectivement un deuxième angle de déflexion desdites deuxièmes surfaces de contrôle, à partir dudit premier moment de roulis commandé, respectivement dudit deuxième moment de roulis commandé, et d'une fonction de conversion non-linéaire, et
- braquer lesdites premières surfaces de contrôle, respectivement lesdites deuxièmes surfaces de contrôle, selon ledit premier angle de déflexion, respectivement selon ledit deuxième angle de déflexion,
ledit procédé étant **caractérisé en ce qu'**il comprend en outre, lorsque lesdites premières surfaces de contrôle sont dans une incapacité à réaliser ledit premier moment de roulis commandé (304) :
- mesurer un angle de braquage réel desdites premières surfaces de contrôle,
- déterminer à partir dudit angle de braquage réel mesuré un moment de roulis réel pour lesdites premières surfaces de contrôle,
- déterminer à partir dudit premier moment de roulis commandé et dudit moment de roulis réel un moment de roulis non réalisé par lesdites premières surfaces de contrôle, et
- déterminer un angle de braquage desdites deuxièmes surfaces de contrôle à partir dudit moment de roulis non réalisé par lesdites premières surfaces de contrôle et ledit deuxième moment de roulis commandé, ledit moment de roulis non réalisé et ledit deuxième moment de roulis commandé alimentant ladite fonction de conversion non-linéaire pour déterminer ledit angle de braquage desdites deuxièmes surfaces de contrôle.

2. Procédé selon la revendication 1, **caractérisé en ce que** ladite fonction de conversion non-linéaire est basée sur une table mettant en correspondance une pluralité de paramètres aérodynamiques dudit aéronef (100) à un moment de roulis pour lesdites premières surfaces de contrôle, respectivement pour lesdites deuxièmes surfaces de contrôle.

3. Procédé selon l'une quelconque des revendications 1 à 2, **caractérisé en ce qu'**au moins un autre ordre de loi de pilotage est combiné audit premier ordre de loi de pilotage et/ou audit deuxième ordre de loi de pilotage.

4. Système de désaturation de premières surfaces de contrôle vers des deuxièmes surfaces de contrôle intégré dans une cinématique de roulis d'un aéronef (100), ledit aéronef étant équipé desdites premières surfaces de contrôle et desdites deuxièmes surfaces de contrôle, ledit système (101) comprenant de la circuiterie électronique configurée pour :
- déterminer un premier moment de roulis commandé à appliquer auxdites premières surfaces de contrôle, respectivement un deuxième moment de roulis commandé à appliquer auxdites deuxièmes surfaces de contrôle, à partir d'un premier ordre de loi de pilotage à réaliser par lesdites premières surfaces de contrôle, respectivement à partir d'un deuxième ordre de loi de pilotage à réaliser par lesdites deuxième surface de contrôle,
- déterminer un premier angle de déflexion desdites premières surfaces de contrôle, respectivement un deuxième angle de déflexion desdites deuxièmes surfaces de contrôle, à partir dudit premier moment de roulis commandé, respectivement dudit deuxième moment de roulis commandé, et d'une fonction de conversion non-linéaire, et
- braquer lesdites premières surfaces de contrôle, respectivement lesdites deuxièmes surfaces de contrôle, selon ledit premier angle de déflexion, respectivement selon ledit deuxième angle de déflexion
ledit système étant **caractérisé en ce que** la circuiterie électronique est en outre configurée pour, lorsque lesdites premières surfaces de contrôle sont dans une incapacité à réaliser ledit premier moment de roulis commandé (304) :
- mesurer un angle de braquage réel desdites premières surfaces de contrôle,
- déterminer à partir dudit angle de braquage réel mesuré un moment de roulis réel pour lesdites premières surfaces de contrôle,
- déterminer à partir dudit premier moment de roulis commandé et dudit moment de roulis réel un moment de roulis non réalisé par lesdites premières surfaces de contrôle, et
- déterminer un angle de braquage desdites deuxièmes surfaces de contrôle à partir dudit moment de roulis non réalisé par lesdites premières surfaces de contrôle et ledit deuxième moment de roulis commandé, ledit moment de roulis non réalisé et ledit deuxième moment de roulis commandé alimentant ladite fonction de conversion non-linéaire pour déterminer ledit angle de braquage desdites deuxièmes surfaces de contrôle.

5. Aéronef comprenant un système (101) selon la revendication 4.

6. Produit programme d'ordinateur, comportant des instructions entraînant l'exécution, par un processeur, d'un procédé selon l'une quelconque des revendications 1 à 3, lorsque lesdites instructions sont exécutées par ledit processeur.

7. Support de stockage, stockant un programme d'ordinateur comportant des instructions entraînant l'exécution, par un processeur, d'un procédé selon l'une quelconque des revendications 1 à 3, lorsque lesdites instructions sont lues depuis le support de stockage et exécutées par ledit processeur.
